# EUROPEAN PATENT SPECIFICATION

(11) **EP 0 463 502 B1**
(45) Date of publication and mention of the grant of the patent: **15.11.1995**
(21) Application number: 91109738.4
(22) Date of filing: 13.06.1991
(51) Int. Cl.: B60N 2/48

(54) **Seat for a motor vehicle**
Kraftfahrzeugsitz
Siège pour véhicule automobile

(30) Priority: 29.06.1990 IT 5311090 U
(43) Date of publication of application: 02.01.1992
(73) Proprietor: FIAT AUTO S.p.A., 10135 Torino (IT)
(72) Inventor: Fubini, Enrica, I-10100 Torino (IT); Magistretti, Vico, I-20100 Milano (IT); Barengo, Giancarlo, I-10100 Torino (IT)
(74) Representative: Boggio, Luigi

(56) References cited:
- WO-A-87/03256
- DE-A- 3 633 012
- DE-A- 3 707 926
- DE-A- 3 820 658
- DE-B- 1 095 139
- FR-A- 2 263 922
- US-A- 1 440 899
- US-A- 3 851 919

## Description

The present invention relates to a motor vehicle seat which offers a high level of comfort for the passenger occupying it when the vehicle is in movement.

As is known, motor vehicle seats comprise a back which is normally provided with a head rest whose function is above all to provide a secure support for the passenger's head during sudden accelerations tending to thrust it towards the rear of the vehicle, as occurs, for example, in the case of an impact against the rear of the body of the said vehicle. The head rest of a normal seat of a motor vehicle is also capable of providing some degree of comfort for the passenger, since it allows him or her to adopt a more relaxed position than seats without head rests.

Seats of this type, however, are not very comfortable because they do not allow the passenger to take up more relaxed positions, in particular a position conducive to sleeping when the vehicle is moving: in fact the head rest only provides support behind, which is wholly insufficient for preventing transversal head movements in the presence of the high accelerations which occur when the vehicle is in motion.

The above drawback is only in part solved by the solutions known, e.g. from DE-A-3820658 or US-A-3851919; in fact, according to these documents, a side support for the passenger's head is provided on one side of a front seat of a vehicle; in the first document, this side support is defined by a vertically slidable side portion of the seat-back, while in the second document the side support is provided in adjustable manner on one lateral wall (the lateral pillar) of the vehicle passenger's compartment. In both cases, in fact, a gap is left between the side support and the seat-back of the seat, so that the passenger's body can slip into the gap when he/she is sleeping. This gap is clearly not optimal for maximising seat comfort.

The aim of the present invention is therefore to realise a motor vehicle seat which is capable of providing a much higher level of comfort when motoring than that obtainable with seats currently provided with head rests and, in particular, to permit sufficiently relaxing positions to be adopted to allow the passenger to sleep.

This aim is achieved by a motor vehicle seat as described in the preamble of Claim 1 and corresponding to the general structure of the seat shown in DE-A-3820658, characterised by the fact that said padded support is only provided on the outer, vehicle door, side of the vehicle seat and extends upwardly from said side portion of said seat back whereby said side portion and said padded support together define a substantially continuous rest surface for the side of the passenger's body.

In this manner, a continuous side support for the passenger's body is provided in order to ensure maximum comfort and, at the same time, the bulk of the seat is contained, especially towards the interior of the passenger's compartment.

For a better understanding of the device of the present innovation, a more detailed description thereof will now be given by way of an example, with reference to the attached drawings in which:
- figure 1 represents a perspective view of a front seat of a motor vehicle based on the present innovation; and
- figure 2 represents a perspective view of a rear seat of a motor vehicle, also realised according to the dictates of the present innovation.

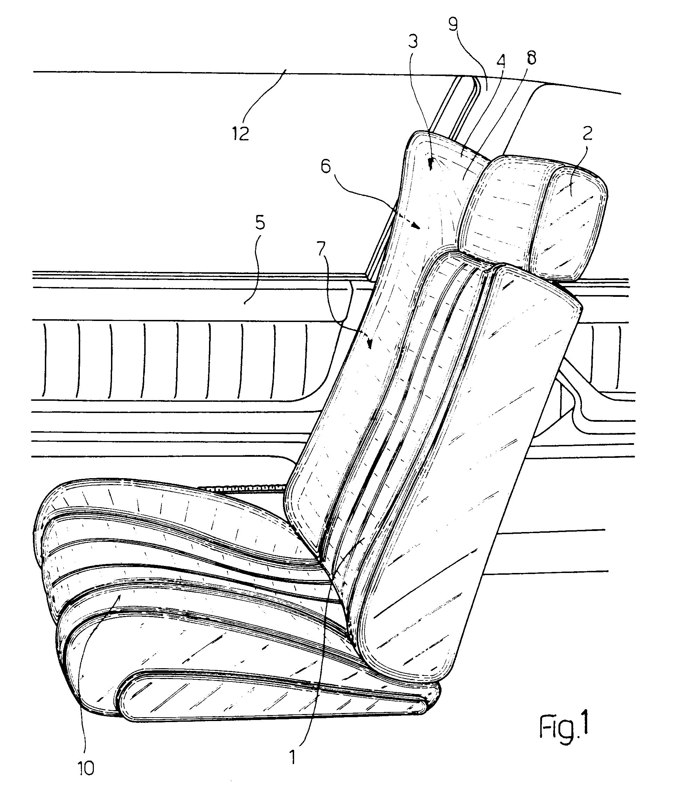

The seat of the innovation comprises substantially a back 1 provided with a head rest 2, fixed to the said back and normally adjustable with respect to it to several configurations according to the anthropometric conditions of the passenger. On the basis of the innovation, the seat comprises a padded support 3 capable of providing support for the passenger's head, positioned at least on one side of the head rest 1 and shaped so as to project forward of the said head rest in order to support the passenger's head when it is thrust to that side. In the form of realisation of figure 1 the pad 3 forms an actual wing 4 which is placed towards the outside of the seat, that is towards the door 5 of the motor vehicle.

Conveniently the wing 4 is delimited on the said side (that is on the side of the door in figure 1) by a surface 6 which is located substantially on the same plane as the surface 7 which delimits the back 1 towards the said side.

Conveniently, but not necessarily, the height of the wing 4 is substantially equal to the height of the head rest 2, so that, when the latter is lowered to its lowest position in direct contact with the top of the seat 1, the upper ends of the said head rest and of the wing 4 project substantially the same distance above the back 1. Furthermore, conveniently but not necessarily, the width of the head rest is defined in such a manner that it is substantially in contact with the surface 8 delimiting the wing 4 on the inner side of the passenger compartment.

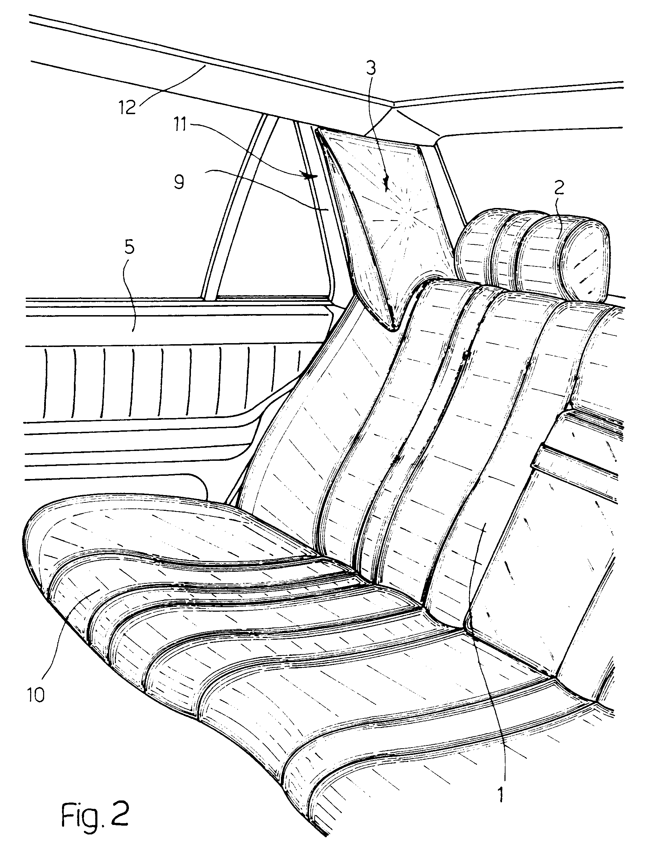

The padded support 3 can also be fixed to one of the rear pillars (fig.2) of the body of the vehicle, located beside the rear seat 10 of the said vehicle; this arrangement is clearly shown in figure 2. In this second case the padded support 3 can be shaped so that it fills part or all of the space 11 delimited by the inside surface of pillar the 9, the roof panel 12 of the passenger compartment and the top surface of the back 1 of the seat.

It is also evident that the seat of the innovation provides a high level of comfort for the passenger. In fact, the passenger can rest his or her head not only on the head rest 2 but also on the padded support 3 and thus adopt several positions in order to find the most suitable one for providing greatest relaxation; in particular the padded support 3 effectively supports the passenger's head, preventing irritating jolts when the vehicle undergoes high transversal accelerations. It has also been acknowledged that, with the padded support 3, the passenger can adopt a position suitable for sleeping, a condition which is particularly appreciated during very long journeys.

It is evident that the described form of realization of the present innovation can be modified and varied in both the shape and position of the various parts without exceeding the scope of the innovation as defined in the appended claims.

## Claims

1. A motor vehicle seat comprising a seat back (1) provided with a head rest (2) and a forwardly projecting side portion (7), said seat further comprising a padded support (3) for the head of the passenger, positioned to one side of said head rest and projecting forwardly from said head rest in order to support the side of the passenger's head,
**characterized** in that
said padded support (3) is only provided on the outer, vehicle door, side of the vehicle seat and extends upwardly from said side portion of said seat back (1) whereby said side portion (7) and said padded support (3) together define a substantially continuous rest surface for the side of the passenger's body.

2. A seat according to claim 1, characterised by the fact that said padded support (3) is formed by a wing of the said back (1), which projects above the back (1) and is positioned to one side of the said head rest (2).

3. A seat according to claim 1, characterised by the fact that the said wing (4) is delimited, on the said side, by a surface (6) positioned substantially on the same plane as the surface (7) which delimits the said back (1) on the same side.

4. A seat according to claim 1, characterised by the fact that said padded support (3) is fixed to a rear pillar (9) of the body of the motor vehicle situated to one side of the rear seat of the vehicle, said padded support (3) extending between the roof panel of the passenger compartment and the top surface of said seat back (1).

## Patentansprüche

1. Kraftfahrzeugsitz mit einer Rückenlehne (1), die mit einer Kopfstütze (2) und einem nach vorne ragenden Seitenabschnitt (7) versehen ist, wobei der Kraftfahrzeugsitz ferner eine gepolsterte Stütze (3) für den Kopf des Fahrgastes umfaßt, die an einer Seite der Kopfstütze angeordnet ist und von der Kopfstütze nach vorne ragt, um den Kopf des Fahrgastes seitlich zu stützen,
**dadurch gekennzeichnet**, daß
die gepolsterte Stütze (3) nur an der Außenseite, der Fahrzeugtürseite, des Kraftfahrzeugsitzes vorgesehen ist und sich von diesem Seitenabschnitt der Rückenlehne (1) nach oben erstreckt, wobei der Seitenabschnitt (7) und die gepolsterte Stütze (3) gemeinsam eine im wesentlichen durchgehende Stützfläche für die Seite des Körpers des Fahrgastes bilden.

2. Sitz nach Anspruch 1, dadurch gekennzeichnet, daß die gepolsterte Stütze (3) mit einem Flügel an der Rückenlehne (1) ausgebildet ist, der nach oben über die Rückenlehne (1) hinausragt und an einer Seite der Kopfstütze (2) angeordnet ist.

3. Sitz nach Anspruch 1, dadurch gekennzeichnet, daß der Flügel (4) an der Seite durch eine Oberfläche (6) begrenzt ist, die im wesentlichen in der gleichen Ebene angeordnet ist wie die Oberfläche (7), die die Rückenlehne (1) auf der gleichen Seite begrenzt.

4. Sitz nach Anspruch 1, dadurch gekennzeichnet, daß die gepolsterte Stütze (3) an einer Hecksäule (9) der Kraftfahrzeugkarosserie, die an einer Seite des Rücksitzes des Fahrzeuges angeordnet ist, befestigt ist, wobei sich die gepolsterte Stütze (3) zwischen dem Dachblech des Fahrgastraumes und der oberen Fläche der Rückenlehne (1) erstreckt.

## Revendications

1. Siège pour véhicule automobile comprenant un dossier (1) pourvu d'un appuie-tête (2) et d'une partie latérale s'étendant vers l'avant (7), ledit siège comprenant en outre un support rembourré (3) pour la tête du passager, ce support étant placé sur un côté dudit appuie-tête et s'étendant vers l'avant à partir dudit appuie-tête afin de supporter le côté de la tête du passager,
caractérisé en ce que :
ledit support rembourré (3) est prévu seulement du côté extérieur du siège de véhicule, vers la porte du véhicule, et il s'étend vers le haut à partir de ladite partie latérale dudit dossier (1), de sorte que ladite partie latérale (7) et ledit support rembourré (3) définissent ensemble une surface d'appui sensiblement continue pour le côté du corps du passager.

2. Siège suivant la revendication 1, caractérisé en ce que ledit support rembourré (3) est formé par une aile dudit dossier (1) qui s'étend au-dessus du dossier (1) et est située sur un côté dudit appuie-tête (2).

3. Siège suivant la revendication 1, caractérisé en ce que ladite aile (4) est délimitée, sur le dit côté, par une surface (6) située sensiblement dans le même plan que la surface (7) qui délimite ledit dossier (1) sur le même côté;

4. Siège suivant la revendication 1, caractérisé en ce que ledit support rembourré (3) est fixé à un montant arrière (9) de la carrosserie du véhicule, situé sur un côté du siège arrière du véhicule, ledit support rembourré (3) s'étendant entre le panneau de toit du compartiment passagers et la surface supérieure dudit dossier (1).
